# EUROPEAN PATENT APPLICATION

(11) **EP 2 535 826 A1**
(43) Date of publication of application: **19.12.2012**
(21) Application number: 12170229.4
(22) Date of filing: 31.05.2012
(51) Int. Cl.: G06F 17/30

(54) **Method and system for data synchronization including file system abstraction**

(30) Priority: 31.05.2011 US 201161491737 P
(71) Applicant: Research In Motion Limited, Waterloo, ON N2L 3W8 (CA)
(72) Inventor: Kaila, Ashish, Mississauga, Ontario L4W 0B5 (CA); Barnes, Jordan, Douglas, Kanata, Ontario K2K 3K1 (CA); Manley, Christopher, Adam, Kanata, Ontario K2K 3K1 (CA)
(74) Representative: MERH-IP Matias Erny Reichl Hoffmann

(57) **Abstract**

A method, apparatus and computer program product for data synchronization between a first file system (110) and a second file system (115). File systems may be associated with handheld devices, memory devices, local or networked computer memory, or the like (330, 335, 340, 355). Interaction with the first and second file systems follow first and second syntaxes, respectively. At least one file system is identified (120), for example based on a file path prefix (114) thereof. One or more translation modules (132) are selected (130) based on the identification, each translation module configured to translate between a file system syntax and a generic syntax. Appropriate aspects of a set of operations for performing the data synchronization are translated using appropriate translation modules.

## Description

### TECHNICAL FIELD

The present technology relates generally to synchronizing data held on plural devices, and, in particular, to a method and system for data synchronization which includes file system abstraction.

### BACKGROUND

Synchronization of data, such as media files, address book or calendar entries, and the like, is commonly performed between different computing devices, such as mobile devices, smart phones, tablet computers, media players, desktop and laptop computers, and the like.

In some cases, it may be required to synchronize data between devices operating different file systems or database structures. In this case, a synchronization utility may be required to interact with both types of file systems or database structures. However, such a utility may typically be customized for interaction between two specific file systems or database structures. Since the file systems differ, complications may arise as to how data should be synchronized.

Virtual file systems are available which provide an abstraction layer on top of a more concrete file system, and which provide a uniform interface between client applications and the concrete file system. However, virtual file systems and synchronization utilities are fundamentally different entities.

Therefore there is a need for a method and system for media synchronization that is not subject to one or more limitations of the prior art.

### SUMMARY

An object of the present technology is to provide a method and system for data synchronization which includes file system abstraction. In accordance with an aspect of the present technology there is provided a method for facilitating data synchronization between a first file system and a second file system, wherein interaction with the first file system follows a first syntax, and wherein interaction with the second file system follows a second syntax, the method comprising: identifying the first file system; selecting a first translation module from a plurality of available translation modules, the first translation module configured to translate between the first syntax and a generic syntax; receiving a set of operations for performing the data synchronization, a first aspect of the set of operations pertaining to interaction with the first file system, the first aspect expressed in the generic syntax; and executing the set of operations, wherein the first aspect is translated using the first translation module.

In accordance with another aspect of the present technology there is provided a An apparatus for facilitating data synchronization with at least one external device, the apparatus comprising: an interface configured for operative coupling to at least a first file system and a second file system, at least one of the first file system and the second file system associated with one of the at least one external devices, wherein interaction with the first file system follows a first syntax; a synchronization module configured to provide a set of operations for performing the data synchronization, a first aspect of the set of operations pertaining to interaction with the first file system, the first aspect expressed in a generic syntax; and an execution module configured to: identify the first file system; select a first translation module from a plurality of available translation modules, the first translation module configured to translate between the first syntax and the generic syntax; receive the set of operations from the synchronization module; and execute the set of operations, wherein the first aspect is translated using the first translation module.

In accordance with another aspect of the present technology there is provided A computer program product for facilitating data synchronization between a first file system and a second file system, wherein interaction with the first file system follows a first syntax, and wherein interaction with the second file system follows a second syntax, the computer program product comprising code which, when loaded into memory and executed on a processor of the second device, is adapted to perform the following: identify the first file system; select a first translation module from a plurality of available translation modules, the first translation module configured to translate between the first syntax and a generic syntax; receive a set of operations for performing the data synchronization, a first aspect of the set of operations pertaining to interaction with the first file system, the first aspect expressed in the generic syntax; and execute the set of operations, wherein the first aspect is translated using the first translation module.

### BRIEF DESCRIPTION OF THE DRAWINGS

Further features and advantages of the present technology will become apparent from the following detailed description, taken in combination with the appended drawings, in which:

FIG. 1 illustrates a method for facilitating data synchronization between a first file system and a second file system, in accordance with embodiments of the present technology.

FIG. 2 illustrates an apparatus for facilitating data synchronization between a first file system and a second file system, in accordance with embodiments of the present technology.

FIG. 3 illustrates data synchronization between a first file system and a second file system, in accordance with embodiments of the present technology.

FIG. 4 illustrates aspects related to file system selection, in accordance with embodiments of the present technology.

It will be noted that throughout the appended drawings, like features are identified by like reference numerals.

### DETAILED DESCRIPTION

The present technology addresses a problem pertaining to data synchronization and communication between multiple file systems. The present disclosure facilitates data synchronization between plural file systems each having their own syntax, by automatically identifying at least one of the file systems, selecting an appropriate translation module for translating between the identified file system's syntax and a generic syntax, and performing the data synchronization, including use of the selected translation module. Conventionally, synchronization operations specific to each file system are specified separately. However, as syntaxes differ between file systems this requires different sets of operations to be stored and executed, which may be problematic from a logistical perspective. A further related problem is that identification of file systems often requires a specific set of queries to be performed, and this process can be streamlined and automated by making use of information already available.

The present technology addresses the foregoing technical problems by providing a method, apparatus and computer program product for data synchronization between multiple file systems. Each of a first file system and a second file system may be associated with devices, such as mobile devices (for example smart phones, tablet computers, media players, and the like), network drives, computers or their hard drives, solid-state memory devices, or the like. Embodiments of the technology provide modularity in the sense that one or more of the file systems may be automatically identified, with the technology automatically adjusting to facilitate data synchronization for the particular identified file systems.

Operations for performing the synchronization may be articulated in a generic syntax, and translated as required to and from appropriate syntaxes for interacting with the particular identified file systems. Embodiments of the technology provide an interface which is responsive in the generic syntax, thereby facilitating an abstraction of the file system. Interfacing with the plural file systems, for example by a synchronization module, can be performed via the generic syntax on the abstracted file system.

In some embodiments, use of a generic syntax for driving the interface with plural, disparate file systems, facilitates the use of a common utility for interfacing with those file systems. Due to the presence of a common utility, a deeper integration of synchronization with different devices may be achieved. For example, global synchronization settings may be more readily applied to plural devices. As another example, synchronization may be strategically differentiated between devices, for example so that different devices are intentionally provided with different media files.

In many cases, it is possible to query a file system to determine its type. For example, within Linux, the "mount" or "df" command may be used to return file system type information. However, knowing which query command to execute requires that at least some information about the device being queried be known in advance. In the above case, if it is not known that the device is running Linux, it is also likely not known that the "mount" or "df" command would be operable. Embodiments of the present technology may circumvent this and other issues. For example, a file system may be identified based on information available without necessarily running a specific query command, such as a prefix of a file path of the file system.

In some embodiments, if encryption support is required, then generic paths may be prefixed appropriately. For example, the prefix \\SDCard may be used for external storage and the prefix \\Store may be used for an internal drive. The generic paths may then be dynamically mapped to a DFTP file system. The above prefixes directly correspond to root dftp file system paths supported by the device via a proprietary DFTP protocol.

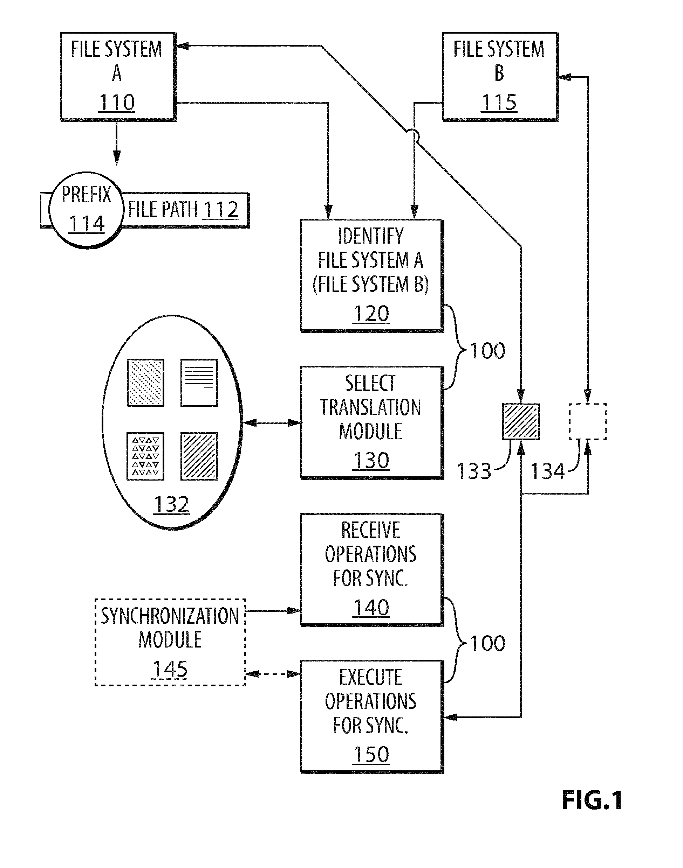

Accordingly, and with reference to FIG. 1, an aspect of the present technology provides a method **100** for facilitating data synchronization between a first file system **110** and a second file system **115.** Interaction with the first file system **110** follows a first syntax, and interaction with the second file system **115** follows a second syntax. The method **100** comprises identifying **120** the first file system. The method **100** further comprises selecting **130** a first translation module from a plurality of available translation modules **132,** based on the identification **120.** The selected first translation module is deployed **133** and configured to translate between the first syntax and a generic syntax. The method further comprises receiving **140** a set of operations for performing the data synchronization, for example as a set of computer program instructions received from a synchronization module **145.** A first aspect of the set of operations pertains to interaction with the first file system, the first aspect being expressed in the generic syntax. The method further comprises executing **150** the set of operations, wherein the first aspect is translated using the first translation module.

In some embodiments, the method further comprises identifying a prefix **114** of a file path **112** of the first file system **110.** Identifying the first file system is based at least in part on said prefix.

In some embodiments, a second aspect of the set of operations pertains to interaction with the second file system **115,** the second aspect expressed in the generic syntax. In some embodiments, the foregoing method further comprises using a second translation module to translate between the second syntax and the generic syntax. In some embodiments, the foregoing method **100** further comprises identifying **120** the second file system **115,** and selecting **130** the second translation module from the plurality of available translation modules **132** based on the identification of the second file system. The selected second translation module is deployed **134.**

Another aspect of the present technology provides a computer program product for facilitating data synchronization between a first device or associated file system and a second device or associated file system. The computer program product comprises code which, when loaded into memory and executed on a processor of a computing device, such as the first device or second device, is adapted to perform operations associated with methods and apparatus as described herein.

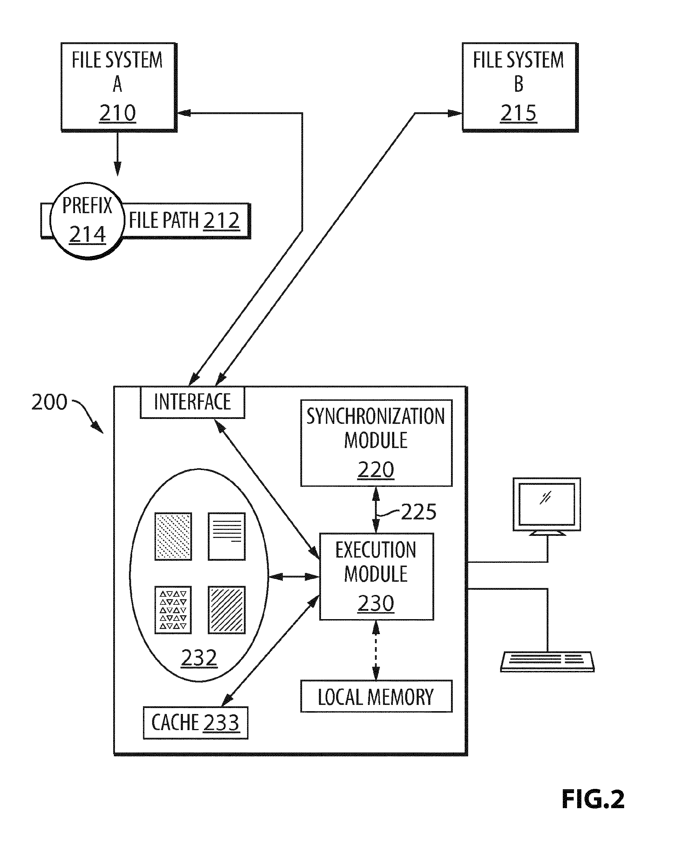

With reference to FIG. 2, yet another aspect of the present technology provides an apparatus **200** for facilitating data synchronization with at least one external device, such as a mobile device. The apparatus **200** comprises an interface configured for operative coupling to at least a first file system **210** and a second file system **215.** At least one of the first file system **210** and the second file system **215** are associated with at least one of the external devices. The apparatus **200** may thus facilitate synchronization between plural external devices, between a local or remote file system accessible by the apparatus, or a combination thereof. Interaction with the first file system **210** follows a first syntax.

The apparatus **200** further comprises a synchronization module **220** configured to provide a set of operations **225** for performing the data synchronization. A first aspect of the set of operations **225** pertains to interaction with the first file system, the first aspect being expressed in a generic syntax.

The apparatus **200** further comprises an execution module **230** configured to identify the first file system **210** and select a first translation module from a plurality of available translation modules **232.** The selection is based on the identification of the first file system **210.** The first translation module is configured to translate between the first syntax and the generic syntax. The execution module **230** is further configured to receive the set of operations **225** from the synchronization module **220** and execute the set of operations **225,** wherein the first aspect of the set of operations **225** is translated using the first translation module, for example prior to or during execution.

In some embodiments, the execution module **230** is further configured to automatically identify a prefix **214** of a file path 212 of the first file system **210.** Identifying the first file system is based at least in part on said prefix.

In some embodiments, a second aspect of the set of operations **225,** provided by the synchronization module **220,** pertains to interaction with the second file system **215,** the second aspect expressed in the generic syntax. In some such embodiments, the execution module **230** is further configured to use a second translation module to translate between the second syntax and the generic syntax. In some further embodiments, the execution module is further configured to: identify the second file system **215,** and select the second translation module from the plurality of available translation modules **232** based on the identification of the second file system **215.**

Also illustrated is a cache memory **233** operatively coupled to the execution module **230.** The cache memory may be used to cache information retrieved from a file system for future use. Usage of the cache memory **233** may be configured based on the translation module or modules in use.

As will be readily apparent from the above, some embodiments of the present technology relate to a method and apparatus which is modular with respect to both the first file system and the second file system. For further clarity, an embodiment of such a method is described as follows. The method comprises identifying the first file system, wherein interaction with the first file system follows a first syntax. The method further comprises identifying the second file system, wherein interaction with the second file system follows a second syntax. The method further comprises selecting first and second translation modules from a plurality of available translation modules. The first translation module is configured to translate between the first syntax and a generic syntax, and the second translation module is configured to translate between the second syntax and the generic syntax. The method further comprises receiving a set of operations for performing the data synchronization. A first aspect of the set of operations pertains to interaction with the first file system, and a second aspect of the set of operations pertains to interaction with the second file system. The first and second aspects are expressed in the generic syntax. The method further comprises executing the set of operations, wherein the first aspect is translated using the first translation module and the second aspect is translated using the second translation module.

The term "file system" is used to describe an aspect of a computing device which stores data in a predefined format. A file system may be associated with one or more data storage media such as hard drives, magnetic, optical or solid state memory, or the like, or a combination thereof. Such data storage media are typically, but not necessarily, rewritable and non-volatile media. Examples of file systems include FAT, NTFS, UFC, DFTP, and the like.

The term "syntax" is used to describe a structured language for interacting with an aspect of a computing device, such as a file system. A syntax typically comprises both input syntax and output syntax. Input syntax comprises a syntax for expressions to which the device employing the syntax is responsive. Output syntax comprises a syntax for expressions which are generated by the device, for example in response to input composed using the input syntax. Interaction with different devices or aspects thereof may follow different syntaxes. That is, a particular device aspect may be responsive to input expressed in a particular input syntax, and may generate output expressed a particular output syntax. Different aspects of computing devices, such as file systems, may have different but typically at least partially analogous capabilities. As such, different syntaxes may relate to different but at least partially analogous expressions such as messages, commands, queries, and the like. For completeness, the term "syntax" may also encompass "grammar," where appropriate.

In some cases the term "syntax" may be extended to encompass conditional or unconditional sequences of expressions, interaction rule sets, and the like. An interaction rule set may comprise, for example, a first sequence of one or more commands, an instruction to wait for and process a response to the first sequence, and an instruction to select a second sequence of one or more commands from a predetermined list, based on the processed response.

The term "expression" is used to describe expressible aspects of a syntax. Examples of expressions include messages, commands, queries, path expressions, and the like. Expressions may be compounded with other expressions, variables, or the like, in accordance with predetermined rules of the syntax.

The term "translation" is used to describe translation of expressions between two syntaxes. For bidirectional communication, translation may accordingly be a bidirectional process. For example, a query expressed in a first syntax, such as a generic syntax, may be translated into an analogous query expressed in a second syntax, such as a device-specific syntax, and a response to the query, expressed in the second syntax, may be subsequently translated into the first syntax.

The term "data synchronization" pertains to operations which ensure data content, such as media files, database entries, address book contacts, calendar entries, and the like, of separate file systems is substantially synchronized or mirrored. Data synchronization may comprise comparing, deleting, updating, adding, and moving files in the file systems, and the like, as would be readily understood by a worker skilled in the art.

### Generic Syntax

The present technology relates, in part, to a generic syntax, which is translatable into other syntaxes by appropriate translation modules. The generic syntax and other syntaxes are generally configured for interacting with file systems. The generic syntax may thus define granular operations which are general to a group of predetermined, standard file system syntaxes.

Granularity of operations in the generic syntax is generally sufficiently fine that translation to and from an adequate range of expressions in the target syntaxes is possible. Further granularity is possible but may increase complexity without substantial benefit. In some embodiments, in order to be sufficiently granular, the generic syntax is constructed so that all expressions in a predetermined set have corresponding expressions in each of the target syntaxes for which translation is enabled.

Embodiments of the present technology may manifest as a file system interface, which can be interacted with via the generic syntax. Thus, for example, an execution module may provide a substantially transparent, abstract file system with which a synchronization module may interact. The results of interaction with the abstract file system translate into real interaction with file systems of devices, memories, and the like.

In some embodiments, the generic syntax is substantially free of data structures that may pertain to a particular syntax of a standard file system. In some embodiments, the generic syntax is thus agnostic of the file system or file systems being interacted with via the generic syntax. In some embodiments, to facilitate reusability and modularity, various components of an interface for interacting in the generic syntax may be re-factored. Path operations, such as concatenation of paths and computation of relative paths, may be re-factored. Logic for extracting prefix-free paths may be re-factored. Such prefix-free paths may be used for actual file system access. Extraction of prefix-free paths may be performed by a path format converter.

For example, given a stored path such as "dftp://System/Users/...", the prefix "dftp://" may be stripped and "System/Users/..." may subsequently be used as the path, for example in the generic syntax and optionally in other syntaxes. The prefix "dftp://" may be stored and used to identify the path type.

In some embodiments, the generic syntax is responsive to commands for manipulating file system paths, such as validating paths, deriving relative paths, deriving absolute paths, obtaining a parent path, and pattern matching of paths. Syntactic checks on path format may be performed using a format converter. Semantic checks on a path may be performed via a path operations module. For example, if a root path is required, it can be validated via the path operations module. The path operations module may further be configured to compute relative and absolute paths, and may be part of the execution module.

In some embodiments, the generic syntax may be expressed in terms of operating on generic object types, such as files, file metadata, file system metadata, directories, dentries, inodes, superblocks, and the like. In some embodiments, the generic syntax may specify the names of objects being operated on, as those names occur in the specific file system to be operated upon. The specified object names may be passed as strings during translation to or from the generic syntax. The object names thus have more abstract meaning in the generic syntax and more concrete meaning in the translated syntax.

In some embodiments, the generic syntax may include batch operations. Each batch operation may be translated into a sequence of granular operations in the generic syntax, each of the sequence of operations then translated into another selected syntax. Additionally or alternatively, each batch operation may be directly translated into a sequence of granular operations expressed in another selected syntax.

### Selection Module

Embodiments of the present technology relate to a selection module, which may be a sub-module or functionality of the execution module. Embodiments of the present technology relate to a method comprising operations described below with respect to the selection module.

The selection module is configured to determine one or more syntaxes of file systems to be interacted with. The selection module is further configured to select one or more appropriate translation modules for translating between the generic syntax and the one or more syntaxes of the file systems to be interacted with.

In some embodiments, determining a syntax of a file system to be interacted with is based on a path prefix of the file system, as will be explained in more detail below. In some embodiments, determining a syntax is additionally or alternatively based on other information. In some embodiments, where a file system is associated with a single syntax, determining a syntax of a file system may simply involve determining the file system.

For example, in some embodiments, the selection module is configured to transmit one or more queries, wherein a response to the query potentially reveals information about the file system syntax. Queries may be used in conjunction with other methods. For example, a set of queries to be transmitted, optionally along with an order of transmission, may be determined based on a path prefix or other information.

In some embodiments, determining a file system syntax may comprise examining information which is available *a priori* without transmitting specific queries. This information may include the path prefix or other information, or both. For example, given a path string associated with a file system, specific elements such as directory names (e.g. "user", "bin", "windows") may imply a specific file system or set of file systems. A path string which contains long file names or special characters may imply a specific file system which supports such long file names or special characters. A path string which contains a file with a specific extension (e.g. ".exe") may imply a specific file system in which files with that extension are commonly associated. The selection module may be configured to detect such information and select an appropriate translation module based at least in part thereon.

In some cases, information provided to the selection module may convey incomplete information about the target file system and its syntax. For example, the path prefix, and optionally other path string characteristics, may indicate that the target file system operates according to one of a set of two or more syntaxes, but does not operate according to at least one other syntax. Thus, although some syntaxes may be ruled out, the precise syntax may yet be unknown. In some embodiments, the path prefix, and optionally other path string characteristics, may be processed to determine a set of probabilities. Each probability is interpreted as the probability that the file system operates according to a given syntax. Bayesian analysis may be used in generation of such probabilities.

In the case of imperfect information, the selection module may perform further analysis to more precisely determine the syntax of the target file system. Further analysis may include generating and transmitting one or more queries to more precisely determine the file system. Queries which are associated with a higher probability of success (based on probabilities as generated above, for example) may be transmitted before queries associated with a lower probability of success. Alternatively, the selection module may simply choose a possible syntax and its associated translation module, and attempt to interact with the target file system using same. More likely (higher probability) syntaxes may be chosen in favour of less likely (lower probability) syntaxes.

Once a syntax is determined, an appropriate translation module is selected from a plurality of translation modules stored in memory. The appropriate translation module may be selected on the basis of a lookup table based on the syntax determination. Use of a lookup table would be readily understood by a worker skilled in the art.

### Use of Path Prefix for File System Identification

Typically, path types associated with a particular file system, and hence a particular file system syntax, can be characterized by a specific prefix that helps distinguish a path from other classes of paths. Examples of path prefixes include FTP://, DFTP:///, HTTP:// C:\, \\drive-name, IRODEX://, BTOBEX://, SMS://, SMTP://, SYNC://, /usr/local/, device:, //, and the like.

In some embodiments, a path prefix can be used, for example by the selection module or associated method operation, to determine which syntaxes or file systems can be used with a particular class of path. For example, a path prefix may be indicative that a particular file system or class of file systems is likely associated with that path. Thus occurrence of a path prefix may be used as an indicator for identifying a particular file system or class of file systems, which facilitates selection of an appropriate translation module.

In some embodiments, each of a plurality of file systems is associated with a translation module, which provides an interface between the syntax of that file system and a generic syntax. When a path is constructed, for example by the synchronization module, a prefix of the path is used to look up an appropriate translation module. Once an appropriate translation module is determined, it is returned back to the path which paths can be used to interact with the file system.

In some embodiments, the path prefix may be obtained from information already available. This may include path strings passed as parameters from the device operating the target file system to the execution module or more particularly to the selection module thereof. For example, upon or following connection with an external device, configuration information stored by the device, for example in non-volatile memory thereof, may be provided to the execution module or selection module. In some embodiments the configuration information is stored in a text file on the device. The device may provide the stored configuration information in response to a query or configuration file retrieval. Configuration information may be retrieved as part of an existing protocol for connecting the external device with the host device.

In some embodiments, constants such as SDCARD and STORE are part of the DFTP protocol specification. The device may be queried to determine a version of DFTP protocol supported by it, and therefore to determine its level of file system support.

In some embodiments, path prefix information may be used in conjunction with other information to identify a file system. For example, based on path prefix, a shortlist of potential file systems may be determined, and one or more queries may be issued to determine a specific file system from the shortlist. As another example, based on the path prefix, a translation module or intermediate translation module may be selected, if available, which provides at least limited usability for interaction with all file systems on the shortlist.

### Translation Module

Embodiments of the present technology relate to a translation module, for example selected from a plurality of available translation modules and appropriate for interoperation with a particular file system or class of file systems. The translation module is configured to perform translation of expressions for interacting with file systems, from a generic syntax associated with a virtual file system, to a particular syntax associated with a particular file system or class of file systems. In some embodiments, a path format converter module may operate as the translation module.

In some embodiments, the translation module may comprise a look-up table in which expressions in the generic syntax are paired with expressions in a target syntax. Whenever an expression is received by the translation module from either the generic file system or the target file system, it can be translated via the lookup table. In some embodiments, names, such as file names or directory names included in expressions, may be identified and passed unaltered through the translation module.

As a first example, in DFTP file system, paths "\\SDCard\Pictures\File.jpg" and "\\SDCard\Pictures\File.jpg.rem" both refer to the same file. (The .rem signifies that a file is encrypted). At the generic level, the .rem extension may be excluded from the generic file paths. In addition, file encryption may be abstracted from clients. That is, during file conversion, the .rem may be stripped from the file path when performing file listings.

As a second example, in Samba volumes connected via RNDIS, the root file path is not constant because it depends on the IP address. In order to provide a constant path, a path may be translated from "\\169.254.0.34\media\photos\file.jpg" to its generic version "\\playbook_media\photos\file.jpg". The file path may be used for example to determine file identity. Although the IP address prefix of the target file system may change on subsequent connections, the generic file path for clients may remain unchanged.

In some embodiments, translation modules may be operated in conjunction with each other. For example, a first translation module may translate between the generic syntax and a selected intermediate syntax, and a second translation module may translate between the intermediate syntax and a specific file system syntax. The intermediate syntax may be considered a type of generic syntax. Intermediate syntaxes may be useful when translation to and from a set of closely related syntaxes is to be implemented. In some embodiments, a set of plural translation modules operating in conjunction may be bundled together and treated as a single translation module.

In some embodiments, each of a set of translation modules to be operated in conjunction may be selected. For example, based on a determination that the path prefix contains backslashes "\" rather than forward slashes, a generic "Windows^{™}" translation module may be selected. Then, based on other characteristics of the path prefix, a specific translation module may be appended to the generic translation module.

In some embodiments, the translation module may be configured to translate between a generic interaction rule set and a target interaction rule set.

The details and particulars of these aspects of the technology will now be described below, by way of example, with reference to the attached drawings.

### Exemplary Embodiment

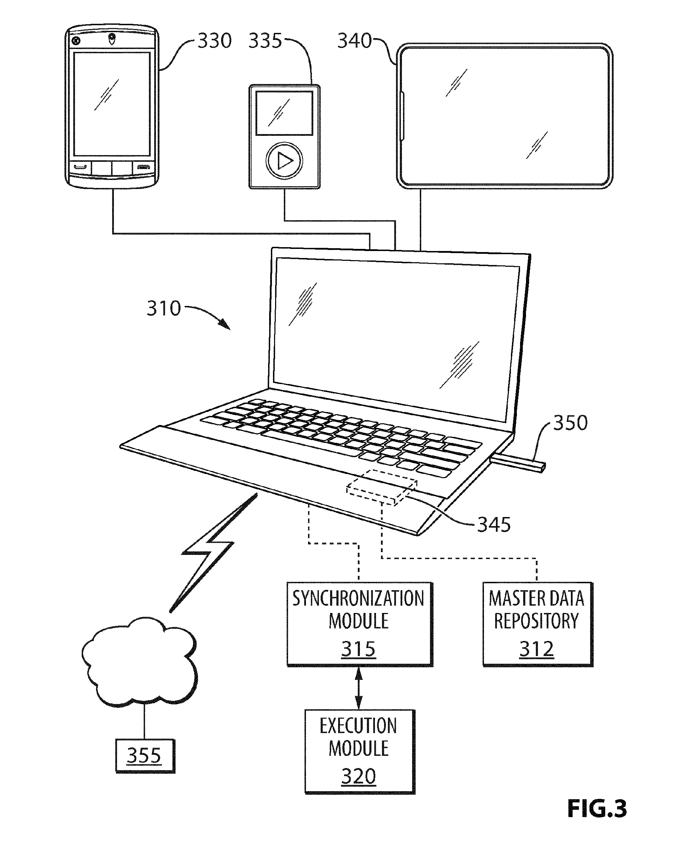

FIG. 3 conceptually illustrates an exemplary embodiment of the present technology. A computing apparatus **310** is configured, for example via software, to facilitate data synchronization with external devices **330, 335,** and **340.** For example, device **330** may be a smartphone, device **335** may be a media player, and device **340** may be a tablet computer. The computing apparatus **310** may further be configured to facilitate data synchronization with internal memory **345,** removable memory media **350,** networked memory **355,** or a combination thereof. The computing apparatus **310** comprises various wired communication capabilities, wireless communication capabilities, or both, to facilitate communication with the external devices **330, 335,** and **340** and various memories **345, 350,** and **355,** as would be readily understood by a worker skilled in the art. Different external devices **330, 335,** and **340** may comprise data, such as media files, address book data, calendar data, stored in memory and associated with different file systems.

In accordance with the present technology, the computing apparatus **310** is capable of interacting with each different file system of the different external devices **330, 335,** and **340,** so as to support data synchronization across same. This may be facilitated at least in part by a flexible abstraction of the operations related to access of the different file systems.

The computing apparatus **310** comprises a synchronization module **315,** which is configured to negotiate synchronization of content across various file systems. The synchronization module **315** may be configured to determine what data is to be transferred between file systems in order to establish a synchronized relationship therebetween. This determination may comprise queries of the various file systems. Once the determination is made, the synchronization module **315** is configured to direct various data operations applied to one or more file systems to establish the synchronized relationship, such as operations for copying files, moving files, deleting files, and the like. Various operations of a synchronization module, generally described, would be readily understood by a worker skilled in the art.

The synchronization module **315** is configured to interact with the various file systems via an execution module **320.** For this purpose, the synchronization module **315** communicates with the execution module **320** at least in part via a generic syntax, which is not necessarily the syntax of a specific file system. For example, the synchronization module **315** may communicate commands to the execution module **320,** the commands expressed in the generic syntax. The execution module **320** may express responses to the synchronization module **315** in the same generic syntax. The synchronization module **315** may then process those responses and generate further commands in the generic syntax, for example conditional on the responses, including data retrieved from the responses, or the like.

As described above, the synchronization module **315** need only operate in the generic syntax. Thus, the synchronization module **315** may be regarded as interacting with an abstract file system, rather than with plural, disparate file systems. The execution module **320** is configured to facilitate an abstraction layer between the synchronization module **315** and the various file systems of devices, memories, and the like, by translating between the generic syntax and the syntaxes of the various file systems. Moreover, the execution module **320** may be configured to automatically recognize the syntaxes of the various file systems and reconfigure itself accordingly.

In some embodiments, plural external devices **330, 335,** and **340** may be concurrently connected to the computing apparatus **310.** In this case, the computing apparatus **310** may be configured to directly synchronize the plural connected external devices.

In some embodiments, each of the plural external devices **330, 335,** and **340** may be connected to the computing apparatus **310** at different times. In this case, the computing apparatus **310** may be configured to store data relevant to the synchronization, for example in internal memory **345,** removable memory media **350,** or networked memory **355.** For example, a "master" or common data repository **312** may thus be stored by the computing apparatus **310,** and each of the plural external devices **330, 335,** and **340** may be synchronized to the "master" or common data repository **312.**

In some embodiments, data synchronization may comprise transcoding of data. This may be executed by the synchronization module, execution module, or both. Transcoding may be performed independently of file system syntax translation, as would be readily understood by a worker skilled in the art.

In general, file systems expose read and write streams of bytes. Embodiments of the present technology are configured to encapsulate synchronization operations, provided by a synchronization module for example, as commands that read from a source file system, optionally perform transcoding and processing, and then write the optionally transcoded bytes to an output (write) stream of a destination file system.

### Translation Module Selection- Exemplary Embodiment

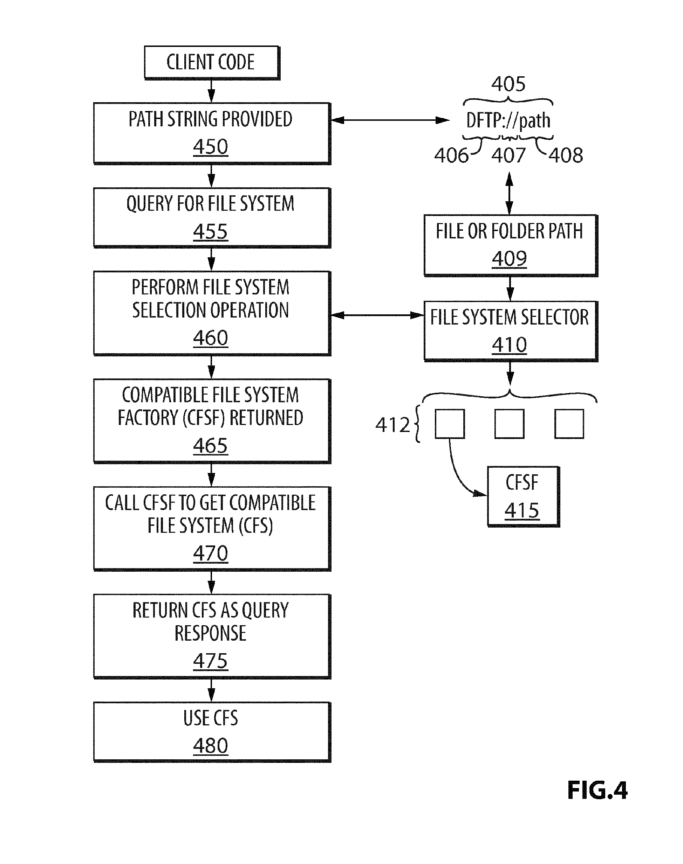

FIG. 4 illustrates operations related to file system identification, path creation, and selection of a translation module, in accordance with embodiments of the present technology. Such operations may be performed by an execution module, selection module, or both.

As illustrated in FIG. 4, a path string **405** is provided **450,** for example by client code, which may be associated with the synchronization module or with code associated with a particular file system, for example. The path string **405** comprises a path prefix **406** and a path suffix **408,** separated by a separator **407,** such as "://" or the like. The path string **405** may, in embodiments, be a string variable, an expression of a syntax, or both. The path string is associated with a stored file or folder path **409.**

After reception of the path string **405,** a query **455** for an appropriate file system is generated, for example during path construction. A file system selection operation is then performed **460** by a file system selector **410,** which may be associated with the execution module or selection module. The file system selector **410** is configured to determine a file system factory, from a plurality of file system factories **412,** which is compatible with the file or folder path **409.** A compatible file system factory may be one which is capable of interpreting the path **409** as an expression in an associated file system syntax, and of translating that expression into a generic syntax. File system factories may also be referred to as translation modules, as described herein. The plurality of file system factories **412** are registered within the file system selector **410.**

In some embodiments, the plurality of file system factories **412** comprises factories for plural potential file systems that may be interacted with, but which are not necessarily currently accessible. In some embodiments, the plurality of file system factories **412** comprises factories for plural potential file systems which are currently accessible, or which have been accessible historically.

Once a compatible file system factory **415** is selected from the plurality **412** and returned **465** to the file system selector **410,** the file system selector **410** calls **470** the file system factory **415** to determine if there is an associated, accessible and compatible file system, and if so, to obtain or access the compatible file system.

Once the compatible file system is obtained or accessed, it may be returned **475** as a response to the query **455,** or alternatively as a response to the file system selection operation **460** of the file system selector **410.** Subsequently, the path **409** uses **480** the compatible file system instance to perform access to the actual file system via an abstracted interface, for example via expressions in the generic syntax.

### Adjusting Interaction Rule Set based on File System

As described above, embodiments of the present technology facilitate adjustable syntactic interaction with a file system based on an identification of the file system type. More generally, embodiments of the present technology may facilitate adjustable interaction (syntactic or otherwise) with a file system based on an identification of the file system type. In addition or alternatively to syntactic interaction, adjustable interactions may include adjustable caching behaviour, adjustable interaction rule sets, adjustable error handling, and the like. In some embodiments, adjustable interaction rule sets may encompass adjustable caching behaviour, adjustable error handling, or the like, or a combination thereof.

For example, as described herein, embodiments of the present technology comprise receiving and executing a set of operations for performing data synchronization. Thus, in some embodiments, the set of operations, their execution, or both, insofar as they pertain to an identified file system, may be adjusted based at least in part on the identification of that file system.

In some embodiments, based on an identification of a file system as described elsewhere herein, interaction with the file system may be adjusted in terms of caching behaviour. Caching behaviour may relate, for example, to information about or contained in the file system which is cached in local memory accessible to the execution module or computer executing a provided set of operations. Use of cached information may increase execution speed at the expense of additional memory overhead, as would be readily understood by a worker skilled in the art. Caching behaviour may relate to what information is cached. Caching behaviour may be adjusted to suit a particular file system, based on an understanding of what information is suited to caching for that file system.

For example, for some file systems, certain operations may take a relatively long time to execute. The Samba^{™} file system, for example, may take a relatively long time to execute a command to find the size of a file. Thus, to reduce potential time delays, embodiments of the present technology may be configured to cache information which is generally returned by the file system in response to a given command, and which can be generally relied upon as being static or quasi-static between uses. As will be readily understood by a worker skilled in the art, instead of querying the file system each time the information is needed, the cached information may be queried instead, and optionally later verified via a file system query.

Determining, for a particular file system, which operations have relatively long execution times may be based on *a priori* expert knowledge. Alternatively, execution times may be measured over time and stored. Operations having execution times higher than a predetermined absolute or relative threshold may then have their results cached.

In some embodiments, based on an identification of a file system as described elsewhere herein, interaction with the identified file system may be adjusted in terms of interaction rule sets. For example, it may be known that, for a given type of file system, interaction with the file system is more effective when performed in a certain manner. Rule sets may define, for example, orders of commands and queries, time delays, operations which may be run in parallel, how to handle errors or timeouts during file system interaction, and the like.

From a certain perspective, an interaction rule set may be considered as a type of syntax or grammar, or alternatively a meta-syntax or meta-grammar. As such, a selected translation module may be configured, as part of its operation, to translate between a generic interaction rule set and a specific interaction rule set. However, the feature of an adjustable interaction rule set is mentioned separately here for greater certainty.

### Computer Program Product

Acts associated with the method described herein can be implemented as coded instructions in a computer program product. In other words, the computer program product is a computer-readable medium upon which software code is recorded to execute the method when the computer program product is loaded into memory and executed on the microprocessor of the mobile device.

### Apparatus

Embodiments of the present technology relate to an apparatus for facilitating data synchronization with an external device. The apparatus may be a special-purpose or general-purpose computer such as a desktop or laptop personal computer, configured via software, firmware, or both. As would be readily understood by a worker skilled in the art, such a computer generally comprises components such as a user interface, processor, volatile memory, non-volatile memory, wired device interface ports, wireless device interface ports, wired network interface ports, wireless network interface ports, power supply, and the like.

One or more processors of the apparatus are generally configured to execute program instructions related to the present technology, the program instructions stored in memory. The apparatus may comprise one or more modules, which may, in some embodiments, be interpreted as functional modules enabled by different sets of program instructions stored in common memory and executed by a common set of processors.

This new technology has been described in terms of specific implementations and configurations (and variants thereof) which are intended to be exemplary only. The scope of the exclusive right sought by the applicant is therefore intended to be limited solely by the appended claims.

## Claims

1. A method for facilitating data synchronization between a first file system (110) and a second file system(115), wherein interaction with the first file system follows a first syntax, and wherein interaction with the second file system follows a second syntax, **characterized in that** the method comprises:
a) identifying (120) the first file system;
b) selecting (130) a first translation module (133) from a plurality (132) of available translation modules, the first translation module configured to translate between the first syntax and a generic syntax;
c) receiving (140) a set of operations for performing the data synchronization, a first aspect of the set of operations pertaining to interaction with the first file system, the first aspect expressed in the generic syntax; and
d) executing (150) the set of operations, wherein the first aspect is translated using the first translation module.

2. The method according to claim 1, further comprising identifying one or more file path (112) characteristics of the first file system, and wherein said identifying the first file system is based at least in part on said one or more file path characteristics.

3. The method according to claim 2, wherein the one or more file path characteristics includes a file path prefix (114).

4. The method according to any of claims 2 to 3, wherein the one or more file path characteristics convey partial information regarding identification of the first file system.

5. The method according to any of claims 1 to 4, wherein the first translation module facilitates adjustment of caching behaviour related to interaction with the first file system.

6. The method according to any of claims 1 to 5, wherein a second aspect of the set of operations pertains to interaction with the second file system, the second aspect expressed in the generic syntax, and wherein the method further comprises using a second translation module (134) to translate between the second syntax and the generic syntax.

7. The method according to claim 6, further comprising identifying the second file system, and selecting the second translation module from the plurality of available translation modules based on the identification of the second file system.

8. The method according to any of claims 1 to 7, wherein the first syntax comprises a first interaction rule set, the generic syntax comprises a generic interaction rule set, and the first translation module is configured to translate between the first interaction rule set and the generic interaction rule set.

9. An apparatus (200) for facilitating data synchronization with at least one external device, the apparatus comprising:
a) an interface configured for operative coupling to at least a first file system (210) and a second file system (215), at least one of the first file system and the second file system associated with one of the at least one external devices, wherein interaction with the first file system follows a first syntax;
b) a synchronization module (220) configured to provide a set of operations for performing the data synchronization;
**characterized in that**:
c) a first aspect of the set of operations pertains to interaction with the first file system, the first aspect expressed in a generic syntax; and
d) wherein the apparatus further comprises an execution module (230) configured to: identify the first file system; select a first translation module from a plurality (232) of available translation modules, the first translation module configured to translate between the first syntax and the generic syntax;
receive the set of operations from the synchronization module; and execute the set of operations, wherein the first aspect is translated using the first translation module.

10. The apparatus according to claim 9, wherein the execution module is further configured to identify one or more file path (212) characteristics of the first file system, and wherein said identifying the first file system is based at least in part on said one or more file path characteristics.

11. The apparatus according to claim 10, wherein the one or more file path characteristics includes a file path prefix (214).

12. The apparatus according to any of claims 10 to 11, wherein the one or more file path characteristics are obtained from a file path string provided to the execution module as a parameter.

13. The apparatus according to any of claims 9 to 12, wherein the first syntax comprises a first interaction rule set, the generic syntax comprises a generic interaction rule set, and the first translation module is configured to translate between the first interaction rule set and the generic interaction rule set.

14. The apparatus according to any of claims 9 to 13, wherein a second aspect of the set of operations pertains to interaction with the second file system, the second aspect expressed in the generic syntax, and wherein the execution module is further configured to use a second translation module to translate between the second syntax and the generic syntax.

15. A computer program product for facilitating data synchronization between a first file system (110) and a second file system (115), wherein interaction with the first file system follows a first syntax, and wherein interaction with the second file system follows a second syntax, the computer program product comprising code which, when loaded into memory and executed on a processor of the second device, is adapted to perform the following:
a) identify (120) the first file system;
b) select (130) a first translation module from a plurality (132) of available translation modules, the first translation module configured to translate between the first syntax and a generic syntax;
c) receive (140) a set of operations for performing the data synchronization, a first aspect of the set of operations pertaining to interaction with the first file system, the first aspect expressed in the generic syntax; and
d) execute (150) the set of operations, wherein the first aspect is translated using the first translation module.
